# EUROPEAN PATENT SPECIFICATION

(11) **EP 4 102 258 B1**
(45) Date of publication and mention of the grant of the patent: **19.08.2026**
(21) Application number: 20899391.5
(22) Date of filing: 09.12.2020
(51) Int. Cl.: G01T 1/02, G01T 7/00

(54) **MEASUREMENT METHOD AND MEASUREMENT SYSTEM FOR NUCLEAR POWER PLANT RADIATION DOSE DISTRIBUTION**
MESSVERFAHREN UND MESSSYSTEM FÜR DIE STRAHLUNGSDOSISVERTEILUNG EINER KERNKRAFTANLAGE
PROCÉDÉ DE MESURE ET SYSTÈME DE MESURE RELATIFS À LA RÉPARTITION DES DOSES DE RAYONNEMENT D'UNE CENTRALE NUCLÉAIRE

(30) Priority: 10.01.2020 CN 202010024521
(43) Date of publication of application: 14.12.2022
(73) Proprietor: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518028 (CN); CGN Power Co., Ltd., Shenzhen, Guangdong 518026 (CN)
(72) Inventor: JIANG, Shang Yue, Shenzhen, Guangdong 518124 (CN); CHEN, Yan, Shenzhen, Guangdong 518124 (CN)
(74) Representative: Greaves Brewster LLP
(86) International application number: PCT/CN2020/134846
(87) International publication number: WO 2021/115315

(56) References cited:
- CN-A- 101 452 079
- CN-A- 104 932 001
- CN-A- 108 152 844
- CN-A- 109 507 710
- CN-A- 111 175 800
- CN-U- 202 854 342
- JP-A- 2019 120 657
- JP-B2- 3 940 115
- US-A1- 2016 238 715
- US-A1- 2017 205 512
- TAKEMURA N ET AL: "View Planning of Multiple Active Cameras for Wide Area Surveillance", 2007 IEEE INTERNATIONAL CONFERENCE ON ROBOTICS AND AUTOMATION - 10-14 APRIL 2007 - ROMA, ITALY, IEEE, PISCATAWAY, NJ, USA, 10 April 2007 (2007-04-10), pages 3173 - 3179, XP031334322, ISBN: 978-1-4244-0601-2

## Description

### FIELD OF THE INVENTION

The present invention generally relates to nuclear power plants and, more particularly, to a measurement method and measurement system for nuclear power plant radiation dose distribution.

### BACKGROUND OF THE INVENTION

In order to ensure the personal safety of member staffs in nuclear power plants, it is necessary to measure the radiation dose distribution in nuclear power plants, so as to send out early warning information in case of accidental excess of radiation dose, reminding staff members to stay away from relevant areas that may pose an occupational health and safety hazard.

At present, the radiation dose measurement of nuclear power plant is generally realized by setting up fixed radiation dose measuring device in some areas of the nuclear power plant. However, the fixed radiation dose measuring device can only measure the radiation dose at the location thereof in real time, and other areas without fixed radiation dose measuring device are blind zones. Limitation of the number of measuring devices leads to many blind zones in the nuclear power plant.

Although portable personal radiation dosimeters are already available for staff members in nuclear power plants, portable personal radiation dosimeters are offline data without the addition of wireless data model, cannot be associated with the location and the measurement time. In accident conditions, portable personal radiation dosimeters cannot warn timely, which may affect the occupational health and safety of the staff members.

In order to meet the requirements of production dispatch and emergency response, the nuclear power plant has been equipped with a wireless communication system for the call-and-search and release of nuclear emergency information, and the provision of mobile data transmission services. However, since most of the current wireless communication systems in nuclear power plants use the method of macro-base stations to cover the wireless rooms in nuclear power plants, such as nuclear islands, one macro-base station corresponds to a large area, portable personal radiation dosimeters or other mobile dose measuring devices, even if equipped with wireless transmission module, can only show the corresponding area of the dose value, dose value and the location of the plant cannot be accurately located. Methods and systems to monitor radiation dose in a nuclear power plant are known from US 2017/205512 A1.

In view of the foregoing, what is needed, therefore, is to provide a measurement method and measurement system for accurate and comprehensive measurement of radiation dose distribution in nuclear power plants.

### SUMMARY OF THE INVENTION

One object of the present application is to provide a measurement method and measurement system for accurate and comprehensive measurement of radiation dose distribution in nuclear power plants, so as to send out early warning information in case of accidental excess of radiation dose, reminding staff members to stay away from relevant areas that may pose an occupational health and safety hazard.

According to the invention, a measurement method for nuclear power plant radiation dose distribution includes the steps as defined in appended claim 1.

According to the invention, a measurement system for nuclear power plant radiation dose distribution is defined in appended claim 6.

Compared with the prior art, the measurement method and measurement system for nuclear power plant radiation dose distribution of the present application sets up a certain number of video cameras in conjunction with an existing wireless communication system, a radiation dose distribution map in the areas of the nuclear power plant that require dose measurement can be accurately drawn, according to the radiation doses measured in real time by means of mobile dose measuring devices carried by all staff members in the nuclear power plant. Therefore, in the case of unexpected excess radiation doses, early warning information can be promptly issued, prompting staff members to stay away from related areas that may endanger occupational health and safety.

### BRIEF DESCRIPTION OF THE DRAWINGS

Fig. 1 shows a flow chart of a measurement method for nuclear power plant radiation dose distribution according to one embodiment of the present application; and
Fig. 2 shows a block diagram of a measurement system for nuclear power plant radiation dose distribution according to one embodiment of the present application.

### DETAILED DESCRIPTION OF THE INVENTION

In order to make the object, technical solution and advantages of the present application more clear, the implementation of the present application will be further described in detail as following in combination with the drawings.

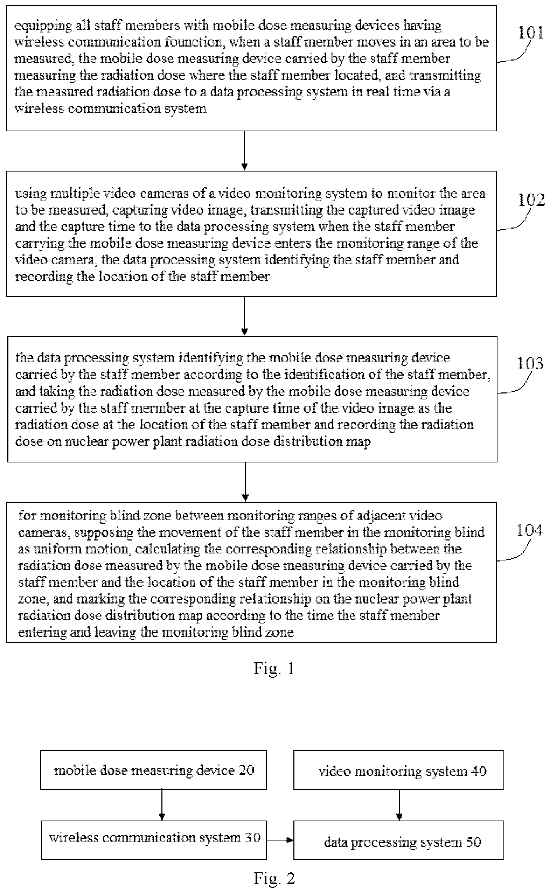

Referring to Fig. 1, the measurement method for nuclear power plant radiation dose distribution includes the steps of:
step 101, equipping all staff members with mobile dose measuring devices having wireless communication function, when a staff member moves in an area to be measured, the mobile dose measuring device carried by the staff member measures the radiation dose where the staff member located, and transmits the measured radiation dose to a data processing system in real time via a wireless communication system;
Specifically, area to be measured refers to an area in the nuclear power plant needs to measure the radiation dose.

Specifically, each mobile dose measuring device is assigned a unique ID, each mobile dose measuring device is associated with a unique staff member. Each staff member carrying a mobile dose measuring device can be identified through a video image, which can be identified through face identification or unique identifier on the helmet or clothes of the staff member, such as a string of characters, letters, numbers, a two-dimensional code, or a bar code on a staff member's helmet or clothing.

step 102, using multiple video cameras of a video monitoring system to monitor the area to be measured, capturing video image, transmitting the captured video image and the capture time to the data processing system when the staff member carrying the mobile dose measuring device enters the monitoring range of the video camera, the data processing system identifying the staff member and recording the location of the staff member;
Specifically, multiple video cameras are installed in the area to be measured, and the exact location of each video camera is marked on the floor plan of the corresponding factory building.

Specifically, the video monitoring system and the wireless communication system adopt a same time reference signal, to ensure time synchronization of the video monitoring system and the wireless communication system.

Specifically, capturing the video image includes identifying multiple measurement points in the video image of each video camera, for example, by marking the measurement points with lines or areas, and the video camera capturing the video image when the staff member passes any measurement point.

Specifically, the data processing system identifying the staff member and recording the location of the staff member includes: the data processing system identifying the staff member via face identification or identification marker and taking the coordinates of the measurement point of the staff member when the video image is captured as its location.
step 103, the data processing system identifying the mobile dose measuring device carried by the staff member according to the identification of the staff member, and taking the radiation dose measured by the mobile dose measuring device carried by the staff member at the capture time of the video image as the radiation dose at the location of the staff member, and recording the radiation dose on nuclear power plant radiation dose distribution map.

Specifically, identifying the mobile dose measuring device carried by the staff member according to the identification of the staff member includes the step of: searching for the ID of the mobile dose measuring device associated with the staff member, and determining the mobile dose measuring device corresponding to the ID as the mobile dose measuring device carried by the staff member.

The method for measuring the radiation dose distribution of a nuclear power plant further comprises the following steps:
step 104, for monitoring blind zone between monitoring ranges of adjacent video cameras, supposing the movement of the staff member in the monitoring blind as uniform motion, calculating the corresponding relationship between the radiation dose measured by the mobile dose measuring device carried by the staff member and the location of the staff member in the monitoring blind zone, and marking the corresponding relationship on the nuclear power plant radiation dose distribution map according to the time the staff member entering and leaving the monitoring blind zone.

Specifically, calculating the corresponding relationship between the radiation dose measured by the mobile dose measuring device carried by the staff member and the location of the staff member in the monitoring blind zone according to the time the staff member entering and leaving the monitoring blind zone comprises the step of:
staff member passing through each location in the monitoring blind zone by the data processing system according to the time the staff member entering and leaving the monitoring blind zone, and using the radiation dose measured by the mobile dose measuring device carried by the staff member at the specific time point as the radiation dose at the corresponding position point; or
dividing the time period of the staff member entering and leaving the monitoring blind zone according to same time interval and obtaining multiple specific time points, calculating the location of the staff member in the monitoring blind zone at each specific time point via the data processing system, and taking the radiation dose measured by the mobile dose measuring device carried by the staff member at each specific time point as the radiation dose at the corresponding location point.

Specifically, in steps 103 and 104, while recording radiation dose at a location on the nuclear power plant radiation dose distribution map, if it is found that the location has been dosed, update the old radiation dose with the new radiation dose.

In the measurement method for nuclear power plant radiation dose distribution of the present application, video cameras cooperates with an existing wireless communication system, a radiation dose distribution map in the areas of the nuclear power plant that require dose measurement can be accurately drawn, according to the radiation doses measured in real time by means of mobile dose measuring devices carried by all staff members in the nuclear power plant.

Referring to Fig. 2, the measurement system for nuclear power plant radiation dose distribution of the present invention includes a mobile dose measurement device 20, a wireless communication system 30, a video monitoring system 40 and a data processing system 50.

The mobile dose measuring device 20 is equipped with a wireless transmission module, for measuring the radiation dose at the location and transmitting the measured radiation dose in real time through a wireless communication system 30. Each mobile dose measuring device 20 is assigned a unique ID, and each mobile dose measuring device 20 is associated with a unique staff member. Each staff member carrying a mobile dose measuring device 20 can be identified through a video image, which can be identified by means of face recognition or a unique identification marker (such as a string of characters, letters, or numbers) on a staff member's helmet or clothing. The mobile dose measuring device 20 may be a portable personal radiation dosimeter.

The wireless communication system is set in important plate (nuclear island), covering all the areas to be measured, for transmitting the radiation dose measured by the mobile dose measuring device 20 to a data processing system 50. Area to be measured refers to the area needs to measure the radiation dose in the nuclear power plant.

The video monitoring system 40 includes a number of video cameras set in the area to be measured, for capturing video image, transmitting the captured video image and the capture time to the data processing system 50 when the staff member carrying the mobile dose measuring device 20 enters the monitoring range of the video camera. The video monitoring system 40 and the wireless communication system 30 adopt a same time reference signal, to ensure time synchronization of the video monitoring system 40 and the wireless communication system 30.

The data processing system 50 is configured for receiving radiation doses transmitted in real time by the wireless communication system 30 and the video images transmitted by the video monitoring system 40 as well as identifying the staff member according to the video images received and recording the location of the staff member; and for identifying the mobile dose measuring device 20 carried by the staff member according to the identification of the staff member, and taking the radiation dose measured by the mobile dose measuring device 20 carried by the staff member at the capture time of the video image as the radiation dose at the location of the staff member and recording the radiation dose on nuclear power plant radiation dose distribution map.

Specifically, the data processing system 50 captures the video image includes identifying multiple measurement points in the video image of each video camera, for example, by marking the measurement points with lines or areas, and the video camera capturing the video image when the staff member passes any measurement point.

Specifically, the data processing system 50 identifying the staff member according to the video image received and recording the location of the staff member includes: the data processing system 50 identifying the staff member via face identification or identification marker and taking the coordinates of the measurement point of the staff member when the video image is captured as its location.

Specifically, the data processing system 50 identifying the mobile dose measuring device carried by the staff member according to the identification of the staff member includes the step of: searching for the ID of the mobile dose measuring device associated with the staff member, and determining the mobile dose measuring device corresponding to the **ID** as the mobile dose measuring device carried by the staff member.

Specifically, during the data processing system 50 recording radiation doses at a location on the nuclear power plant radiation dose distribution map, if it is found that the location has been dosed, update the old radiation dose with the new radiation dose.

The data processing system 50 is also configured for supposing the movement of the staff member in the monitoring blind zone between monitoring ranges of adjacent video cameras as uniform motion, calculating the corresponding relationship between the radiation dose measured by the mobile dose measuring device 20 carried by the staff member and the location of the staff member in the monitoring blind zone, and marking the corresponding relationship on the nuclear power plant radiation dose distribution map according to the time the staff member entering and leaving the monitoring blind zone.

Specifically, calculating the corresponding relationship between the radiation dose measured by the mobile dose measuring device 20 carried by the staff member and the location of the staff member in the monitoring blind zone according to the time the staff member entering and leaving the monitoring blind zone includes the step of:
setting multiple location points in the monitoring blind zone, calculating specific time points of the staff member passing through each location in the monitoring blind zone by the data processing system 50 according to the time the staff member entering and leaving the monitoring blind zone, and using the radiation dose measured by the mobile dose measuring device 20 carried by the staff member at the specific time point as the radiation dose at the corresponding position point; or
dividing the time period of the staff member entering and leaving the monitoring blind zone according to same time interval and obtaining multiple specific time points, calculating the location of the staff member in the monitoring blind zone at each specific time point via the data processing system, and taking the radiation dose measured by the mobile dose measuring device carried by the staff member at each specific time point as the radiation dose at the corresponding location point.

Compared with the prior art, the measurement method and measurement system for nuclear power plant radiation dose distribution of the present application sets up a certain number of video cameras in conjunction with an existing wireless communication system, a radiation dose distribution map in the areas of the nuclear power plant that require dose measurement (especially in the important plant such as nuclear island) can be accurately drawn, according to the radiation doses measured in real time by means of mobile dose measuring devices 20 carried by all staff members in the nuclear power plant. Therefore, in the case of unexpected excess radiation doses, early warning information can be promptly issued, prompting staff members to stay away from related areas that may endanger occupational health and safety.

## Claims

1. A measurement method for nuclear power plant radiation dose distribution, wherein the measurement method comprises the steps of:
1) equipping all staff members with mobile dose measuring devices (20) having wireless communication function, when a staff member moves in an area to be measured, the mobile dose measuring device (20) carried by the staff member measuring the radiation dose where the staff member located, and transmitting the measured radiation dose to a data processing system (50) in real time via a wireless communication system (30);
2) using multiple video cameras of a video monitoring system (40) to monitor the area to be measured, capturing video image, transmitting the captured video image and the capture time to the data processing system (50) when the staff member carrying the mobile dose measuring device (20) enters the monitoring range of the video camera, the data processing system (50) identifying the staff member and recording the location of the staff member;
3) the data processing system (50) identifying the mobile dose measuring device (20) carried by the staff member according to the identification of the staff member, and taking the radiation dose measured by the mobile dose measuring device (20) carried by the staff member at the capture time of the video image as the radiation dose at the location of the staff member and recording the radiation dose on nuclear power plant radiation dose distribution map;
4) for monitoring blind zone between monitoring ranges of adjacent video cameras, supposing the movement of the staff member in the monitoring blind zone as uniform motion, calculating the corresponding relationship between the radiation dose measured by the mobile dose measuring device (20) carried by the staff member and the location of the staff member in the monitoring blind zone, and marking the corresponding relationship on the nuclear power plant radiation dose distribution map according to the time the staff member entering and leaving the monitoring blind zone,
wherein calculating the corresponding relationship between the radiation dose measured by the mobile dose measuring device (20) carried by the staff member and the location of the staff member in the monitoring blind zone according to the time the staff member entering and leaving the monitoring blind zone comprises the step of:
setting multiple location points in the monitoring blind zone, calculating specific time points of the staff member passing through each location in the monitoring blind zone by the data processing system (50) according to the time the staff member entering and leaving the monitoring blind zone, and using the radiation dose measured by the mobile dose measuring device (20) carried by the staff member at the specific time point as the radiation dose at the corresponding position point; or dividing the time period of the staff member entering and leaving the monitoring blind zone according to same time interval and obtaining multiple specific time points, calculating the location of the staff member in the monitoring blind zone at each specific time point via the data processing system (50), and taking the radiation dose measured by the mobile dose measuring device (20) carried by the staff member at each specific time point as the radiation dose at the corresponding location point.

2. The measurement method for nuclear power plant radiation dose distribution of claim 1, wherein,
in step 2), capturing the video image comprises: identifying multiple measurement points in the video image of each video camera, and the video camera capturing the video image when the staff member passes any measurement point;
the data processing system (50) identifying the staff member and recording the location of the staff member comprises: the data processing system (50) identifying the staff member via facial recognition or identification markers, and taking the coordinates of the measurement point of the staff member when the video image is captured as its location;
the identification marker is a unique string of characters, letters, numbers, a two-dimensional code or a bar code arranged on the helmet or clothes of the staff member.

3. The measurement method for nuclear power plant radiation dose distribution of claim 1, wherein each mobile dose measuring device (20) is assigned a unique ID, each mobile dose measuring device (20) is associated with a unique staff member;
in step 3) identifying the mobile dose measuring device (20) carried by the staff member according to the identification of the staff member comprises the step of: searching for the ID of the mobile dose measuring device (20) associated with the staff member, and determining the mobile dose measuring device (20) corresponding to the ID as the mobile dose measuring device (20) carried by the staff member.

4. The measurement method for nuclear power plant radiation dose distribution of any one of claims 1 to 3, wherein the video monitoring system (40) and the wireless communication system (30) adopt a same time reference signal, to ensure time synchronization of the video monitoring system (40) and the wireless communication system (30).

5. The measurement method for nuclear power plant radiation dose distribution of any one of claims 1 to 3, wherein, while recording radiation dose at a location on the nuclear power plant radiation dose distribution map, if it is found that the location has been dosed, update the old radiation dose with the new radiation dose.

6. A measurement system for nuclear power plant radiation dose distribution, wherein the measurement system comprises:
a mobile dose measuring device (20) with a wireless transmission module, for measuring the radiation dose at the location and transmitting the measured radiation dose in real time through a wireless communication system (30);
the wireless communication system (30), covering all the areas to be measured, for transmitting the radiation dose measured by the mobile dose measuring device (20) to a data processing system (50);
a video monitoring system (40), comprising multiple video cameras set in the area to be measured, for capturing video image, transmitting the captured video image and the capture time to the data processing system (50) when the staff member carrying the mobile dose measuring device (20) enters the monitoring range of the video camera;
the data processing system (50), for receiving radiation doses transmitted in real time by the wireless communication system (30) and the video images transmitted by the video monitoring system (40), as well as identifying the staff member according to the video images received and recording the location of the staff member; and for identifying the mobile dose measuring device (20) carried by the staff member according to the identification of the staff member, and taking the radiation dose measured by the mobile dose measuring device (20) carried by the staff member at the capture time of the video image as the radiation dose at the location of the staff member and recording the radiation dose on nuclear power plant radiation dose distribution map,
wherein the data processing system (50) is configured for supposing the movement of the staff member in the monitoring blind zone between monitoring ranges of adjacent video cameras as uniform motion, calculating the corresponding relationship between the radiation dose measured by the mobile dose measuring device (20) carried by the staff member and the location of the staff member in the monitoring blind zone, and marking the corresponding relationship on the nuclear power plant radiation dose distribution map according to the time the staff member entering and leaving the monitoring blind zone, and
wherein the data processing system (50) calculating the corresponding relationship between the radiation dose measured by the mobile dose measuring device (20) carried by the staff member and the location of the staff member in the monitoring blind zone according to the time the staff member entering and leaving the monitoring blind zone comprises the step of:
setting multiple location points in the monitoring blind zone, calculating specific time points of the staff member passing through each location in the monitoring blind zone by the data processing system (50) according to the time the staff member entering and leaving the monitoring blind zone, and using the radiation dose measured by the mobile dose measuring device (20) carried by the staff member at the specific time point as the radiation dose at the corresponding position point; or
dividing the time period the staff member entering and leaving the monitoring blind zone into same time interval and obtaining multiple specific time points, calculating the location of the staff member in the monitoring blind zone at each specific time point via the data processing system (50), and taking the radiation dose measured by the mobile dose measuring device (20) carried by the staff member at each specific time point as the radiation dose at the corresponding location point.

7. The measurement system for nuclear power plant radiation dose distribution of claim 6, wherein,
the data processing system (50) capturing the video image comprises: identifying multiple measurement points in the video image of each video camera, and the video camera capturing the video image when the staff member passes any measurement point;
the data processing system (50) identifying the staff member according to the video images received and recording the location of the staff member comprises: the data processing system (50) identifying the staff member via facial recognition or identification markers, and taking the coordinates of the measurement point of the staff member when the video image is captured as its location;
the identification marker is a unique string of characters, letters, numbers, a two-dimensional code or a bar code arranged on the helmet or clothes of the staff member.

8. The measurement system for nuclear power plant radiation dose distribution of claim 6, wherein each mobile dose measuring device (20) is assigned a unique ID, each mobile dose measuring device (20) is associated with a unique staff member;
the data processing system (50) identifying the mobile dose measuring device (20) carried by the staff member according to the identification of the staff member comprises the step of searching for the ID of the mobile dose measuring device (20) associated with the staff member, and determining the mobile dose measuring device (20) corresponding to the ID as the mobile dose measuring device (20) carried by the staff member.

9. The measurement system for nuclear power plant radiation dose distribution of any one of claims 6 to 8, wherein the video monitoring system (40) and the wireless communication system (30) adopt a same time reference signal, to ensure time synchronization of the video monitoring system (40) and the wireless communication system (30).

10. The measurement system for nuclear power plant radiation dose distribution of any one of claims 6 to 8, wherein while recording radiation dose at a location on the nuclear power plant radiation dose distribution map, if it is found that the location has been dosed, update the old radiation dose with the new radiation dose.

## Patentansprüche

1. Messverfahren für die Strahlungsdosisverteilung einer Kernkraftanlage, wobei das Messverfahren die folgenden Schritte umfasst:
1) Ausstatten aller Mitglieder der Belegschaft mit mobilen Dosismessvorrichtungen (20), die eine Drahtloskommunikationsfunktion aufweisen, wenn sich ein Mitglied der Belegschaft in einem zu messenden Bereich bewegt, Messen, durch die mobile Dosismessvorrichtung (20), die durch das Mitglied der Belegschaft getragen wird, der Strahlungsdosis dort, wo sich das Mitglied der Belegschaft befindet, und Übertragen der gemessenen Strahlungsdosis an ein Datenverarbeitungssystem (50) in Echtzeit über ein Drahtloskommunikationssystem (30);
2) Verwenden mehrfacher Videokameras eines Videoüberwachungssystems (40) zum Überwachen des zu messenden Bereichs, Aufnehmen eines Videobilds, Übertragen des aufgenommenen Videobilds und der Aufnahmezeit an das Datenverarbeitungssystem (50), wenn das Mitglied der Belegschaft, das die mobile Dosismessvorrichtung (20) trägt, in die Überwachungsreichweite der Videokamera eintritt, wobei das Datenverarbeitungssystem (50) das Mitglied der Belegschaft identifiziert und den Standort des Mitglieds der Belegschaft aufzeichnet;
3) Identifizieren, durch das Datenverarbeitungssystem (50), der mobilen Dosismessvorrichtung (20), die durch das Mitglied der Belegschaft getragen wird, gemäß der Identifizierung des Mitglieds der Belegschaft und Heranziehen der durch die mobile Dosismessvorrichtung (20), die durch das Mitglied der Belegschaft getragen wird, zum Aufnahmezeitpunkt des Videobilds gemessenen Strahlungsdosis als die Strahlungsdosis an dem Standort des Mitglieds der Belegschaft und Aufzeichnen der Strahlungsdosis auf der Strahlungsdosisverteilungskarte der Kernkraftanlage;
4) bei einer Überwachungsblindzone zwischen Überwachungsreichweiten benachbarter Videokameras, Annehmen der Bewegung des Mitglieds der Belegschaft in der Überwachungsblindzone als gleichmäßiges Bewegen, Berechnen der entsprechenden Beziehung zwischen der durch die mobile Dosismessvorrichtung (20), die durch das Mitglied der Belegschaft getragen wird, gemessenen Strahlungsdosis und dem Standort des Mitglieds der Belegschaft in der Überwachungsblindzone und Bezeichnen der entsprechenden Beziehung auf der Strahlungsdosisverteilungskarte der Kernkraftanlage gemäß der Zeit, zu der das Mitglied der Belegschaft die Überwachungsblindzone betritt und verlässt,
wobei das Berechnen der entsprechenden Beziehung zwischen der durch die mobile Dosismessvorrichtung (20), die durch das Mitglied der Belegschaft getragen wird, gemessenen Strahlungsdosis und dem Standort des Mitglieds der Belegschaft in der Überwachungsblindzone gemäß der Zeit, zu der das Mitglied der Belegschaft die Überwachungsblindzone betritt und verlässt, den folgenden Schritt umfasst:
Einrichten mehrfacher Standortpunkte in der Überwachungsblindzone, Berechnen spezifischer Zeitpunkte, zu denen das Mitglied der Belegschaft jeden Standort in der Überwachungsblindzone passiert, durch das Datenverarbeitungssystem (50) gemäß der Zeit, zu der das Mitglied der Belegschaft die Überwachungsblindzone betritt und verlässt, und Verwenden der durch die mobile Dosismessvorrichtung (20), die durch das Mitglied der Belegschaft getragen wird, zu dem spezifischen Zeitpunkt gemessenen Strahlungsdosis als die Strahlungsdosis an dem entsprechenden Positionspunkt; oder
Teilen der Zeitspanne, in der das Mitglied der Belegschaft die Überwachungsblindzone betritt und verlässt, gemäß gleichem Zeitintervall und Erlangen mehrfacher spezifischer Zeitpunkte, Berechnen des Standorts des Mitglieds der Belegschaft in der Überwachungsblindzone zu jedem spezifischen Zeitpunkt über das Datenverarbeitungssystem (50) und Heranziehen der durch die mobile Dosismessvorrichtung (20), die durch das Mitglied der Belegschaft getragen wird, zu jedem spezifischen Zeitpunkt gemessenen Strahlungsdosis als die Strahlungsdosis an dem entsprechenden Standortpunkt.

2. Messverfahren für die Strahlungsdosisverteilung einer Kernkraftanlage nach Anspruch 1, wobei
das Aufnehmen des Videobildes in Schritt 2) Folgendes umfasst: Identifizieren mehrfacher Messpunkte in dem Videobild jeder Videokamera und Aufnehmen des Videobilds durch die Videokamera, wenn das Mitglied der Belegschaft einen beliebigen Messpunkt passiert;
das Identifizieren, durch das Datenverarbeitungssystem (50), des Mitglieds der Belegschaft und das Aufzeichnen des Standorts des Mitglieds der Belegschaft Folgendes umfasst: Identifizieren, durch das Datenverarbeitungssystem (50), des Mitglieds der Belegschaft mittels Gesichtserkennung oder Identifikationskennzeichnungen und Heranziehen der Koordinaten des Messpunkts des Mitglieds der Belegschaft, während das Videobild aufgenommen wird, als dessen Standort;
die Identifikationskennzeichnung eine eindeutige Folge von Zeichen, Buchstaben, Zahlen, ein zweidimensionaler Code oder ein Strichcode ist, die/der auf dem Helm oder der Kleidung des Mitglieds der Belegschaft angeordnet ist.

3. Messverfahren für die Strahlungsdosisverteilung einer Kernkraftanlage nach Anspruch 1, wobei jeder mobilen Dosismessvorrichtung (20) eine eindeutige ID zugewiesen ist, wobei jede mobile Dosismessvorrichtung (20) einem eindeutigen Mitglied der Belegschaft zugeordnet ist; wobei in Schritt 3) das Identifizieren der mobilen Dosismessvorrichtung (20), die durch das Mitglied der Belegschaft getragen wird, gemäß der Identifizierung des Mitglieds der Belegschaft den folgenden Schritt umfasst: Suchen nach der ID der mobilen Dosismessvorrichtung (20), die dem Mitglied der Belegschaft zugeordnet ist, und Bestimmen der mobilen Dosismessvorrichtung (20), die der ID entspricht, als die mobile Dosismessvorrichtung (20), die durch das Mitglied der Belegschaft getragen wird.

4. Messverfahren für die Strahlungsdosisverteilung einer Kernkraftanlage nach einem der Ansprüche 1 bis 3, wobei das Videoüberwachungssystem (40) und das Drahtloskommunikationssystem (30) ein gleiches Zeitreferenzsignal anwenden, um eine Zeitsynchronisation des Videoüberwachungssystems (40) und des Drahtloskommunikationssystems (30) sicherzustellen.

5. Messverfahren für die Strahlungsdosisverteilung einer Kernkraftanlage nach einem der Ansprüche 1 bis 3, wobei während eines Aufzeichnens der Strahlungsdosis an einem Standort auf der Strahlungsdosisverteilungskarte der Kernkraftanlage die alte Strahlungsdosis mit der neuen Strahlungsdosis aktualisieren, falls festgestellt wird, dass für den Standort eine Dosis angegeben ist.

6. Messsystem für die Strahlungsdosisverteilung einer Kernkraftanlage, wobei das Messsystem Folgendes umfasst:
eine mobile Dosismessvorrichtung (20) mit einem Drahtlosübertragungsmodul zum Messen der Strahlungsdosis an dem Standort und Übertragen der gemessenen Strahlungsdosis in Echtzeit durch ein Drahtloskommunikationssystem (30);
das Drahtloskommunikationssystem (30), das alle zu messenden Bereiche abdeckt, zum Übertragen der durch die mobile Dosismessvorrichtung (20) gemessenen Strahlungsdosis an ein Datenverarbeitungssystem (50);
ein Videoüberwachungssystem (40), das mehrfache Videokameras umfasst, die in dem zu messenden Bereich eingerichtet sind, zum Aufnehmen eines Videobilds, Übertragen des aufgenommenen Videobilds und der Aufnahmezeit an das Datenverarbeitungssystem (50), wenn das Mitglied der Belegschaft, das die mobile Dosismessvorrichtung (20) trägt, in die Überwachungsreichweite der Videokamera eintritt;
das Datenverarbeitungssystem (50) zum Empfangen von Strahlungsdosen, die in Echtzeit durch das Drahtloskommunikationssystem (30) übertragen werden, und der Videobilder, die durch das Videoüberwachungssystem (40) übertragen werden, sowie zum Identifizieren des Mitglieds der Belegschaft gemäß den empfangenen Videobildern und zum Aufzeichnen des Standorts des Mitglieds der Belegschaft; und zum Identifizieren der mobilen Dosismessvorrichtung (20), die durch das Mitglied der Belegschaft getragen wird, gemäß der Identifizierung des Mitglieds der Belegschaft und Heranziehen der durch die mobile Dosismessvorrichtung (20), die durch das Mitglied der Belegschaft getragen wird, zum Aufnahmezeitpunkt des Videobilds gemessenen Strahlungsdosis als die Strahlungsdosis an dem Standort des Mitglieds der Belegschaft und Aufzeichnen der Strahlungsdosis auf der Strahlungsdosisverteilungskarte der Kernkraftanlage,
wobei das Datenverarbeitungssystem (50) konfiguriert ist zum Annehmen der Bewegung des Mitglieds der Belegschaft in der Überwachungsblindzone zwischen Überwachungsreichweiten benachbarter Videokameras als gleichmäßiges Bewegen, Berechnen der entsprechenden Beziehung zwischen der durch die mobile Dosismessvorrichtung (20), die durch das Mitglied der Belegschaft getragen wird, gemessenen Strahlungsdosis und dem Standort des Mitglieds der Belegschaft in der Überwachungsblindzone und Bezeichnen der entsprechenden Beziehung auf der Strahlungsdosisverteilungskarte der Kernkraftanlage gemäß der Zeit, zu der das Mitglied der Belegschaft die Überwachungsblindzone betritt und verlässt, und
wobei das Berechnen, durch das Datenverarbeitungssystem (50), der entsprechenden Beziehung zwischen der durch die mobile Dosismessvorrichtung (20), die durch das Mitglied der Belegschaft getragen wird, gemessenen Strahlungsdosis und dem Standort des Mitglieds der Belegschaft in der Überwachungsblindzone gemäß der Zeit, zu der das Mitglied der Belegschaft die Überwachungsblindzone betritt und verlässt, den folgenden Schritt umfasst:
Einrichten mehrfacher Standortpunkte in der Überwachungsblindzone, Berechnen spezifischer Zeitpunkte, zu denen das Mitglied der Belegschaft jeden Standort in der Überwachungsblindzone passiert, durch das Datenverarbeitungssystem (50) gemäß der Zeit, zu der das Mitglied der Belegschaft die Überwachungsblindzone betritt und verlässt, und Verwenden der durch die mobile Dosismessvorrichtung (20), die durch das Mitglied der Belegschaft getragen wird, zu dem spezifischen Zeitpunkt gemessenen Strahlungsdosis als die Strahlungsdosis an dem entsprechenden Positionspunkt; oder
Teilen der Zeitspanne, in der das Mitglied der Belegschaft die Überwachungsblindzone betritt und verlässt, in gleiches Zeitintervall und Erlangen mehrfacher spezifischer Zeitpunkte, Berechnen des Standorts des Mitglieds der Belegschaft in der Überwachungsblindzone zu jedem spezifischen Zeitpunkt über das Datenverarbeitungssystem (50) und Heranziehen der durch die mobile Dosismessvorrichtung (20), die durch das Mitglied der Belegschaft getragen wird, zu jedem spezifischen Zeitpunkt gemessenen Strahlungsdosis als die Strahlungsdosis an dem entsprechenden Standortpunkt.

7. Messsystem für die Strahlungsdosisverteilung einer Kernkraftanlage nach Anspruch 6, wobei
das Aufnehmen des Videobilds durch das Datenverarbeitungssystem (50) Folgendes umfasst:
Identifizieren mehrfacher Messpunkte in dem Videobild jeder Videokamera und Aufnehmen des Videobilds durch die Videokamera, wenn das Mitglied der Belegschaft einen beliebigen Messpunkt passiert;
das Identifizieren, durch das Datenverarbeitungssystem (50), des Mitglieds der Belegschaft gemäß den empfangenen Videobildern und Aufzeichnen des Standorts des Mitglieds der Belegschaft Folgendes umfasst: Identifizieren, durch das Datenverarbeitungssystem (50), des Mitglieds der Belegschaft mittels Gesichtserkennung oder Identifikationskennzeichnungen und Heranziehen der Koordinaten des Messpunkts des Mitglieds der Belegschaft, während das Videobild aufgenommen wird, als dessen Standort;
die Identifikationskennzeichnung eine eindeutige Folge von Zeichen, Buchstaben, Zahlen, ein zweidimensionaler Code oder ein Strichcode ist, die/der auf dem Helm oder der Kleidung des Mitglieds der Belegschaft angeordnet ist.

8. Messsystem für die Strahlungsdosisverteilung einer Kernkraftanlage nach Anspruch 6, wobei jeder mobilen Dosismessvorrichtung (20) eine eindeutige ID zugewiesen ist, wobei jede mobile Dosismessvorrichtung (20) einem eindeutigen Mitglied der Belegschaft zugeordnet ist; das Identifizieren, durch das Datenverarbeitungssystem (50), der mobilen Dosismessvorrichtung (20), die durch das Mitglied der Belegschaft getragen wird, gemäß der Identifizierung des Mitglieds der Belegschaft den Schritt eines Suchens nach der ID der mobilen Dosismessvorrichtung (20), die dem Mitglied der Belegschaft zugeordnet ist, und eines Bestimmens der mobilen Dosismessvorrichtung (20), die der ID entspricht, als die mobile Dosismessvorrichtung (20), die durch das Mitglied der Belegschaft getragen wird, umfasst.

9. Messsystem für die Strahlungsdosisverteilung einer Kernkraftanlage nach einem der Ansprüche 6 bis 8, wobei das Videoüberwachungssystem (40) und das Drahtloskommunikationssystem (30) ein gleiches Zeitreferenzsignal anwenden, um eine Zeitsynchronisation des Videoüberwachungssystems (40) und des Drahtloskommunikationssystems (30) sicherzustellen.

10. Messsystem für die Strahlungsdosisverteilung einer Kernkraftanlage nach einem der Ansprüche 6 bis 8, wobei während eines Aufzeichnens der Strahlungsdosis an einem Standort auf der Strahlungsdosisverteilungskarte der Kernkraftanlage die alte Strahlungsdosis mit der neuen Strahlungsdosis aktualisieren, falls festgestellt wird, dass für den Standort eine Dosis angegeben ist.

## Revendications

1. Procédé de mesure relatif à la répartition de doses de rayonnement d'une centrale nucléaire, ledit procédé de mesure comprenant les étapes de :
1) équipement de tous les membres du personnel de dispositifs mobiles de mesure de dose (20) possédant une fonction de communication sans fil, lorsqu'un membre du personnel se déplace dans une zone à mesurer, le dispositif de mesure de dose mobile (20) porté par le membre du personnel mesurant la dose de rayonnement là où le membre du personnel se trouve, et transmission de la dose de rayonnement mesurée à un système de traitement de données (50) en temps réel par l'intermédiaire d'un système de communication sans fil (30) ;
2) utilisation de multiples caméras vidéo d'un système de surveillance vidéo (40) pour surveiller la zone à mesurer, capture de l'image vidéo, transmission de l'image vidéo capturée et du temps de capture au système de traitement de données (50) lorsque le membre du personnel portant le dispositif de mesure de dose mobile (20) entre dans la plage de surveillance de la caméra vidéo, le système de traitement de données (50) identifiant le membre du personnel et enregistrant l'emplacement du membre du personnel ;
3) identification, par le système de traitement de données (50), du dispositif de mesure de dose mobile (20) porté par le membre du personnel selon l'identification du membre du personnel, et relevé de la dose de rayonnement mesurée par le dispositif de mesure de dose mobile (20) porté par le membre du personnel au temps de capture de l'image vidéo en tant que dose de rayonnement à l'emplacement du membre du personnel et enregistrement de la dose de rayonnement sur la carte de répartition de doses de rayonnement de la centrale nucléaire ;
4) pour la surveillance de zone aveugle entre les plages de surveillance des caméras vidéo adjacentes, supposition du mouvement du membre du personnel dans la zone aveugle de surveillance comme étant un mouvement uniforme, calcul de la relation correspondante entre la dose de rayonnement mesurée par le dispositif de mesure de dose mobile (20) porté par le membre du personnel et l'emplacement du membre du personnel dans la zone aveugle de surveillance, et marquage de la relation correspondante sur la carte de répartition de doses de rayonnement de la centrale nucléaire selon le moment où le membre du personnel entre et sort de la zone aveugle de surveillance,
ledit calcul de la relation correspondante entre la dose de rayonnement mesurée par le dispositif de mesure de dose mobile (20) porté par le membre du personnel et l'emplacement du membre du personnel dans la zone aveugle de surveillance selon le moment où le membre du personnel entre et sort de la zone aveugle de surveillance comprenant l'étape de :
définition de multiples points d'emplacement dans la zone aveugle de surveillance, calcul de points dans le temps spécifiques du membre du personnel passant par chaque emplacement dans la zone aveugle de surveillance par le système de traitement de données (50) selon le moment où le membre du personnel entre et sort de la zone aveugle de surveillance, et utilisation de la dose de rayonnement mesurée par le dispositif de mesure de dose mobile (20) porté par le membre du personnel au point dans le temps spécifique en tant que dose de rayonnement au point de position correspondant ; ou
division de la période de temps du membre du personnel entrant et sortant de la zone aveugle de surveillance selon le même intervalle de temps et obtention de multiples points dans le temps spécifiques, calcul de l'emplacement du membre du personnel dans la zone aveugle de surveillance à chaque point dans le temps spécifique par l'intermédiaire du système de traitement de données (50), et relevé de la dose de rayonnement mesurée par le dispositif de mesure de dose mobile (20) porté par le membre du personnel à chaque point dans le temps spécifique en tant que dose de rayonnement au point d'emplacement correspondant.

2. Procédé de mesure relatif à la répartition de doses de rayonnement d'une centrale nucléaire de la revendication 1,
à l'étape 2), ladite capture de l'image vidéo comprenant : l'identification de multiples points de mesure dans l'image vidéo de chaque caméra vidéo, et la caméra vidéo capturant l'image vidéo lorsque le membre du personnel passe par n'importe quel point de mesure ;
l'identification par le système de traitement de données (50) du membre du personnel et ledit enregistrement de l'emplacement du membre du personnel comprenant : le système de traitement de données (50) identifiant le membre du personnel par l'intermédiaire d'une reconnaissance faciale ou de marqueurs d'identification, et le relevé des coordonnées du point de mesure du membre du personnel lorsque l'image vidéo est capturée en tant que son emplacement ;
ledit marqueur d'identification étant une chaîne unique de caractères, de lettres, de chiffres, un code à deux dimensions ou un code à barres disposé sur le casque ou les vêtements du membre du personnel.

3. Procédé de mesure relatif à la répartition de doses de rayonnement d'une centrale nucléaire de la revendication 1, un ID unique étant attribué à chaque dispositif de mesure de doses mobile (20), chaque dispositif de mesure de dose mobile (20) étant associé à un membre du personnel unique ;
à l'étape 3) ladite identification du dispositif de mesure de dose mobile (20) porté par le membre du personnel selon l'identification du membre du personnel comprenant l'étape de : recherche de l'ID du dispositif de mesure de dose mobile (20) associé au membre du personnel, et détermination du dispositif de mesure de dose mobile (20) correspondant à l'ID en tant que dispositif de mesure de dose mobile (20) porté par le membre du personnel.

4. Procédé de mesure relatif à la répartition de doses de rayonnement d'une centrale nucléaire de l'une quelconque des revendications 1 à 3, ledit système de surveillance vidéo (40) et ledit système de communication sans fil (30) adoptant un même signal de référence temporelle, afin d'assurer la synchronisation temporelle du système de surveillance vidéo (40) et du système de communication sans fil (30).

5. Procédé de mesure relatif à la répartition de doses de rayonnement d'une centrale nucléaire de l'une quelconque des revendications 1 à 3, tout en enregistrant la dose de rayonnement au niveau d'un emplacement sur la carte de répartition de doses de rayonnement de la centrale nucléaire, si la réception d'une dose au niveau de l'emplacement a été constatée, mettre à jour l'ancienne dose de rayonnement avec la nouvelle dose de rayonnement.

6. Système de mesure relatif à la répartition de doses de rayonnement d'une centrale nucléaire, ledit système de mesure comprenant :
un dispositif de mesure de dose mobile (20) avec un module de transmission sans fil, destiné à mesurer la dose de rayonnement au niveau de l'emplacement et à transmettre la dose de rayonnement mesurée en temps réel par l'intermédiaire d'un système de communication sans fil (30) ;
le système de communication sans fil (30), couvrant toutes les zones à mesurer, pour transmettre la dose de rayonnement mesurée par le dispositif de mesure de dose mobile (20) à un système de traitement de données (50) ;
un système de surveillance vidéo (40), comprenant de multiples caméras vidéo installées dans la zone à mesurer, destiné à capturer l'image vidéo, transmettant l'image vidéo capturée et le temps de capture au système de traitement de données (50) lorsque le membre du personnel portant le dispositif de mesure de dose mobile (20) entre dans la plage de surveillance de la caméra vidéo ;
le système de traitement de données (50), destiné à recevoir les doses de rayonnement transmises en temps réel par le système de communication sans fil (30) et les images vidéo transmises par le système de surveillance vidéo (40), ainsi qu'a identifier le membre du personnel selon des images vidéo reçues et à enregistrer l'emplacement du membre du personnel ; et destiné à identifier le dispositif de mesure de dose mobile (20) porté par le membre du personnel selon l'identification du membre du personnel, et à relever la dose de rayonnement mesurée par le dispositif de mesure de dose mobile (20) porté par le membre du personnel au temps de capture de l'image vidéo en tant que dose de rayonnement au niveau de l'emplacement du membre du personnel et à enregistrer la dose de rayonnement sur la carte de répartition de doses de rayonnement de la centrale nucléaire,
ledit système de traitement de données (50) étant configuré pour supposer que le mouvement du membre du personnel dans la zone aveugle de surveillance entre les plages de surveillance des caméras vidéo adjacentes est comme un mouvement uniforme, calculer la relation correspondante entre la dose de rayonnement mesurée par le dispositif de mesure de dose mobile (20) porté par le membre du personnel et l'emplacement du membre du personnel dans la zone aveugle de surveillance, et marquer la relation correspondante sur la carte de répartition de doses de rayonnement de la centrale nucléaire selon le moment où le membre du personnel entre et sort de la zone aveugle de surveillance, et
ledit système de traitement de données (50) calculant la relation correspondante entre la dose de rayonnement mesurée par le dispositif de mesure de dose mobile (20) porté par le membre du personnel et l'emplacement du membre du personnel dans la zone aveugle de surveillance selon le moment où le membre du personnel entre et sort de la zone aveugle de surveillance comprenant l'étape de :
définition de multiples points d'emplacement dans la zone aveugle de surveillance, calcul des points dans le temps spécifiques du membre du personnel passant par chaque emplacement dans la zone aveugle de surveillance par le système de traitement de données (50) selon le moment où le membre du personnel entre et sort de la zone aveugle de surveillance, et utilisation de la dose de rayonnement mesurée par le dispositif de mesure de dose mobile (20) porté par le membre du personnel au point dans le temps spécifique en tant que dose de rayonnement au point de position correspondant ; ou
division de la période de temps pendant laquelle le membre du personnel entre et sort de la zone aveugle de surveillance en intervalles de temps identiques et obtention de multiples points de temps spécifiques, calcul de l'emplacement du membre du personnel dans la zone aveugle de surveillance à chaque point dans le temps spécifique par l'intermédiaire du système de traitement de données (50), et relevé de la dose de rayonnement mesurée par le dispositif de mesure de dose mobile (20) porté par le membre du personnel à chaque point dans le temps spécifique en tant que dose de rayonnement au point d'emplacement correspondant.

7. Procédé de mesure relatif à la répartition de doses de rayonnement d'une centrale nucléaire de la revendication 6,
ledit système de traitement de données (50) capturant l'image vidéo comprenant : l'identification de multiples points de mesure dans l'image vidéo de chaque caméra vidéo, et la caméra vidéo capturant l'image vidéo lorsque le membre du personnel passe par n'importe quel point de mesure ;
l'identification par le système de traitement de données (50) du membre du personnel selon les images vidéo reçues et l'enregistrement de l'emplacement du membre du personnel comprenant : le système de traitement de données (50) identifiant le membre du personnel par l'intermédiaire d'une reconnaissance faciale ou de marqueurs d'identification, et relevé des coordonnées du point de mesure du membre du personnel lorsque l'image vidéo est capturée en tant que son emplacement ;
ledit marqueur d'identification étant une chaîne unique de caractères, de lettres, de chiffres, un code à deux dimensions ou un code à barres disposé sur le casque ou les vêtements du membre du personnel.

8. Système de mesure relatif à la répartition de doses de rayonnement d'une centrale nucléaire de la revendication 6, un ID unique étant attribué à chaque dispositif de mesure de dose mobile (20), chaque dispositif de mesure de dose mobile (20) étant associé à un membre du personnel unique ;
le système de traitement de données (50) identifiant le dispositif de mesure de dose mobile (20) porté par le membre du personnel selon l'identification du membre du personnel comprenant l'étape de recherche de l'ID du dispositif de mesure de dose mobile (20) associé au membre du personnel, et détermination du dispositif de mesure de dose mobile (20) correspondant à l'ID en tant que dispositif de mesure de dose mobile (20) porté par le membre du personnel.

9. Système de mesure relatif à la répartition de doses de rayonnement d'une centrale nucléaire de l'une quelconque des revendications 6 à 8, ledit système de surveillance vidéo (40) et ledit système de communication sans fil (30) adoptant un même signal de référence temporelle, afin d'assurer la synchronisation temporelle du système de surveillance vidéo (40) et du système de communication sans fil (30).

10. Système de mesure relatif à la répartition de doses de rayonnement d'une centrale nucléaire de l'une quelconque des revendications 6 à 8, tout en enregistrant la dose de rayonnement au niveau d'un emplacement sur la carte de répartition de doses de rayonnement de la centrale nucléaire, si la réception d'une dose au niveau de l'emplacement a été constatée, mettre à jour l'ancienne dose de rayonnement avec la nouvelle dose de rayonnement.
